# EUROPEAN PATENT APPLICATION

(11) **EP 4 273 996 A1**
(43) Date of publication of application: **08.11.2023**
(21) Application number: 21914146.2
(22) Date of filing: 23.12.2021
(51) Int. Cl.: H01M 10/0585, H01M 10/613, H01M 10/615, H01M 10/617, H01M 10/625, H01M 10/654, H01M 10/653, H01M 10/655, H01M 50/249, H01M 50/209

(54) **BATTERY CELL AND BATTERY MODULE COMPRISING SAME**

(30) Priority: 31.12.2020 CN 202011620645; 31.12.2020 CN 202023319538 U
(71) Applicant: Fuzhou Fusshia Cell Co., Ltd., Fuzhou, Fujian 350015 (CN)
(72) Inventor: CHEN, Jian, Fuzhou, Fujian 350015 (CN); XU, Tao, Fuzhou, Fujian 350015 (CN); ZHU, Liangyan, Fuzhou, Fujian 350015 (CN)
(74) Representative: Walther Bayer Faber Patentanwälte PartGmbB
(86) International application number: PCT/CN2021/140872
(87) International publication number: WO 2022/143409

(57) **Abstract**

The present disclosure relates to a battery cell, comprising a battery case, several layers of cyclically and alternately stacked positive plates, diaphragms and negative plates. A diaphragm is provided between adjacent positive and negative plates. At least one edge of the positive current collector extends outward beyond an edge of the positive active material layer and an edge of the diaphragm, and an edge of the negative current collector and an edge of the negative active material layer on the same side are shorter than the edge of the diaphragm, but not shorter than an edge of the positive active material layer. The positive current collector extends to be connected with the adjacent shell or end cover of the battery case, or extends to be connected with a first heat conductor, wherein the first heat conductor is connected with the adjacent shell or end cover of the battery case. The extension parts of the positive current collector and the first heat conductor are enclosed in the battery case. The shell or end cover of the battery case connected with the positive current collectors or the first heat conductors is used as a positive heat dissipation surface of the battery. The first heat conductor is made of a heat conducting material so as to conduct the heat on the positive current collectors to the shell or end cover of the battery case.

## Description

### Technical Field

The invention relates to the technical field of battery, more particularly to a battery cell and a battery module comprising the same.

### Background Art

In order to alleviate the global environmental and resource problems caused by traditional fuel vehicles, many countries are vigorously developing the electric vehicle industry. Lithium-ion power battery is a key component of electric vehicle, which directly affects and restricts the power, economy, reliability and safety of the electric vehicle. Lithium-ion power battery has a high requirement for the working temperature, 20-50 degrees Celsius being the best working temperature. It requires rapid heat dissipation in summer and rapid heating in winter to ensure stable and efficient operation of the battery.

At present, the main materials that make up the lithium-ion power battery are manganese, cobalt, ternary and ferrous lithium phosphate compounds, all of which are inorganic salts with poor thermal conductivity. Due to the defects of the current batteries in structure, it is difficult to import heat into and export heat from a thick battery, resulting in a serious problem that the heat in the battery cannot be quickly and evenly dissipated in summer and the battery cannot be quickly and evenly heated in winter. Consequently, electric vehicles cannot be used in high-heat and cold areas, as complex and expensive heat dissipation and heating systems have to be installed, which, however, consume too much energy and affect the service life of the battery, or even lead to thermal runaway to seriously threaten the safety of vehicles and personnel. Therefore, how to heat the lithium-ion power battery and dissipate its heat quickly and effectively has become an urgent technical problem to be solved.

At present, the heat dissipating system on the power battery commonly used in the electric vehicle mainly takes heat away from the surface of the power battery cell by liquid cooling or air cooling. However, because the inside of the battery cell is usually a composite structure composed of cyclically and alternately stacked three layers of positive plates, diaphragms and negative plates, and the diaphragm has a poor thermal conductivity, the heat dissipation on the surface of the battery cell is faster than that inside the battery cell, resulting in a large temperature gradient inside the battery cell, unevenness of the temperature of the battery cell, and different deterioration speeds of the various parts of the battery cell, which seriously affects the service life of the battery cell. Moreover, heat dissipation by contact on the surface has very low efficiency.

As for the common heat dissipation means in the art, the Chinese patent application No. 201910949761.4 discloses a flexible power battery pack for electric vehicles based on tab heat dissipation, which is characterized by comprising a closable housing, wherein at least two columns of flexible power battery packs are arranged in the housing, and each column has multiple layers of flexible power battery cells; several layers of liquid cooling pipe are arranged between two columns of battery packs, and the liquid cooling pipe comprises water inlets arranged at two sides and a water outlet arranged in the middle; the flexible power battery cell has a positive tab and a negative tab, and the positive and negative tabs are closely abutted to the outer surface of the liquid cooling pipe via heat-conducting silica gel.

Or further, each column of battery packs has 2n layers of battery cells, and n layers of liquid cooling pipe are provided, wherein a liquid cooling pipe is arranged between every two layers of battery cells, and the positive and negative tabs of battery cells are arranged on the upper/lower surfaces of the corresponding liquid cooling pipe.

According to this technology, the heat-conducting silica gel is arranged outside the battery, that is, between two battery cells, and the heat generated by the battery is discharged through the close abutment between the heat-conducting silica gel and the outer surface of the liquid cooling pipe, which can enhance the heat dissipation effect of the battery cells and improve the temperature consistency between the battery cells. However, because the battery pack is a combination of a number of densely arranged battery cells, the dense heat-conducting silica gel and liquid cooling pipes occupy the spaces inside the battery pack and thus greatly enlarge its volume, which significantly reduces the grouping rate of the battery pack and the energy density per unit volume of the battery system.

From the above, it can be seen that the existing battery cells generally dissipate heat from the two side surfaces thereof, but the heat in the middle of the battery cell cannot be exported in time, so the various parts of the battery cell have uneven temperatures.

Secondly, the activity of lithium ions depends on the ambient temperature, the higher the temperature is, the greater the activity of lithium ions is, and vice versa.

When the temperature drops and the activity of lithium ions decreases, the electrolyte in the battery will become solidified, and the lithium ions will encounter a larger resistance when flowing in the electrolyte. As a result, many lithium ions can't move from the negative electrode to the positive electrode, and the battery will output a smaller amount of current, resulting in a decrease of the cruising range of pure electric vehicles. The cold weather may even fail the pure electric vehicle halfway, especially in the northern regions of China.

To solve this problem, many automobile enterprises choose installing a PTC heating system, i.e. installing PTC heat sheets around the battery pack to heat it by heating the air around. In addition to the PTC heating system, some vehicles are also equipped with a diesel heating system to heat the liquid in the pipes around the battery pack.

However, due to the large size of the battery, the slow heat transfer from the outside to the inside, and the existence of temperature gradient between the inside and outside of the battery, the internal temperature of the battery may still be very low even if the external surface temperature of the battery is very high. Thus the temperature of the battery is imbalance, and the low temperature situation is not essentially changed.

To sum up, there are three technical problems regarding the lithium batteries that need to be solved urgently:
Firstly, the internal heat of the battery pack cannot be exported in time, and the heat in the battery pack cannot be effectively dissipated.

Secondly, the battery has a low performance and a short cruising range in low temperature situation.

Thirdly, the battery has a complex structure and a low energy density per unit volume.

Therefore, it calls for a new battery cell and battery pack featuring rapid heat dissipation, good low temperature performance, simple structure, and high energy density per unit volume to meet the actual needs.

### Summary of the Invention

One of the objectives of the present invention is to provide a battery cell using the current collectors for heat conduction, which has the advantages of fast heat conduction and small volume, and can quickly and effectively dissipate heat and perform self-heating, ensuring that the battery has a high energy density per unit volume.

Another objective of the present invention is to provide a battery module comprising several battery cells and a module housing, which has the advantages of fast heat conduction and small volume, and can quickly and effectively dissipate heat and perform self-heating, ensuring that the battery has a high energy density per unit volume.

There are at least three technical solutions to achieve the first objective of the present invention, which are as follows:

### Technical solution 1:

A battery cell, comprising a battery case, several layers of cyclically and alternately stacked positive plates, diaphragms and negative plates, wherein the battery case comprises a shell and an end cover, the positive plates, the diaphragms and the negative plates are enclosed in the battery case; each positive plate comprises a positive current collector and a positive active material layer covering one or both side surfaces thereof, each negative plate comprises a negative current collector and a negative active material layer covering one or both side surfaces thereof, and each diaphragm is provided between adjacent positive and negative plates, characterized in that at least one edge of the positive current collector extends outward beyond an edge of the positive active material layer and an edge of the diaphragm, and an edge of the negative current collector and an edge of the negative active material layer on the same side are shorter than the edge of the diaphragm, but not shorter than the edge of the positive active material layer; the positive current collectors extend to be connected with the adjacent shell or end cover of the battery case, or extend to be connected with a first heat conductor, wherein the first heat conductor is connected with the adjacent shell or end cover of the battery case; the extension parts of the positive current collectors and the first heat conductor are enclosed in the battery case; the shell or end cover of the battery case connected with the positive current collectors or the first heat conductor is used as a positive heat dissipation surface of the battery; the first heat conductor is made of a heat conducting material so as to conduct the heat on each positive current collector to the shell or end cover of the battery case at the same shortest heat conducting distance.

### Technical solution 2:

A battery cell, comprising a battery case, several layers of cyclically and alternately stacked positive plates, diaphragms and negative plates, wherein the battery case comprises a shell and an end cover, the positive plates, the diaphragms and the negative plates are enclosed in the battery case; each positive plate comprises a positive current collector and a positive active material layer covering one or both side surfaces thereof, each negative plate comprises a negative current collector and a negative active material layer covering one or both side surfaces thereof, and each diaphragm is provided between adjacent positive and negative plates, characterized in that at least one edge of the negative current collector extends outward beyond an edge of the negative active material layer and an edge of the diaphragm, and an edge of the positive current collector and an edge of the positive active material layer on the same side are shorter than an edge of the diaphragm, and not beyond the edge of the negative active material layer; the negative current collectors extend to be connected with the adjacent shell or end cover of the battery case, or extend to be connected with a second heat conductor, wherein the second heat conductor is connected with the adjacent shell or end cover of the battery case; the extension parts of the negative current collectors and the second heat conductor are enclosed in the battery case; the shell or end cover of the battery case connected with the negative current collectors or the second heat conductor is used as a negative heat dissipation surface of the battery; the second heat conductor is made of a heat conducting material so as to conduct the heat on each negative current collector to the shell or end cover of the battery case at the same shortest heat conducting distance.

### Technical solution 3:

On the basis of technical solution 1, at least one edge of the negative current collector extends outward beyond an edge of the negative active material layer and an edge of the diaphragm, and an edge of the positive current collector and an edge of the positive active material layer on the same side are shorter than an edge of the diaphragm, and not beyond the edge of the negative active material layer; the outward extending edge of the positive current collector and that of the negative current collector are located at different sides thereof; the negative current collectors extend to be connected with the adjacent shell or end cover of the battery case, or extend to be connected with a second heat conductor, wherein the second heat conductor is connected in contact with the adjacent shell or end cover of the battery case; the extension parts of the negative current collectors and the second heat conductor are enclosed in the battery case; the shell or end cover of the battery case connected with the negative current collectors or the second heat conductor is used as a negative heat dissipation surface of the battery; the second heat conductor is made of a heat conducting material, so as to conduct the heat on each negative current collector to the shell or end cover of the battery case at the same shortest heat conducting distance.

In order to achieve better technical effects, the above technical solutions of the present invention may specifically include the following technical features:
1. The extension parts of the positive current collectors are connected, by way of direct contact connection, locking connection, abutting connection, pressing connection, welding connection, adhesion connection or fastening connection, with the adjacent shell or end cover of the battery case directly or after bending.
2. The extension parts of the positive current collectors are connected, by way of direct contact connection, locking connection, abutting connection, pressing connection, welding connection, adhesion connection or fastening connection, with the first heat conductor directly or after bending.
3. The extension parts of the negative current collectors are connected, by way of direct contact connection, locking connection, abutting connection, pressing connection, welding connection, adhesion connection or fastening connection, with the adjacent shell or end cover of the battery case directly or after bending.
4. The extension parts of the negative current collectors are connected, by way of direct contact connection, locking connection, abutting connection, pressing connection, welding connection, adhesion connection or fastening connection, with the second heat conductor directly or after bending.
5. The extension parts of several or all of the positive current collectors are fastened to each other.
6. The extension parts of several or all of the negative current collectors are fastened to each other.
7. The first heat conductor and/or the second heat conductor are made of heat-conducting silica gel, metal sheets or other heat-conducting materials.
8. The thickness of the battery cell along a stacking direction of the positive plates, the diaphragms and the negative plates is greater than the length or width of the positive current collector or the negative current collector.

There are at least two technical solutions to achieve the second objective of the present invention, which are as follows:
A battery module, comprising a module housing and several battery cells according to one of the three technical solutions to achieve the first objective of the present invention, characterized in that the battery cells are electrically connected with each other, and all the battery cells are closely arranged to each other.

A battery module, comprising a module housing and several battery cells according to one of the three technical solutions to achieve the first objective of the present invention, characterized in that the several battery cells are divided into several columns, and all the battery cells in each column are electrically connected and closely arranged to each other, and the columns are also closely arranged to each other.

To achieve a better technical effect, the module housing is internally provided with a heat dissipation device, which is in contact with the positive and/or negative heat dissipation surface of the battery case.

Compared with the prior art, the technical solutions of the present invention have the following beneficial effects:
1. According to the present invention, extension parts are provided at the edges of the positive and negative current collectors, so that the current collector of each positive and negative plates becomes a heat conducting member to conduct the heat on each current collector to the shell or the end cover of the battery case at the same shortest heat conducting distance. In this way, the heat inside the battery cell can be directly and rapidly discharged, which greatly enhances the heat dissipation effect of the battery cell. The heat generated by each plate in the battery cell during its operation is led out by the current collector itself, featuring fast and uniform heat conduction and stable heat dissipation effect. Meanwhile, the heat conduction by the current collectors can also be used to heat the inside of the battery, making its temperature rise rapidly and uniformly.
2. The uniformity between the temperatures of various regions inside the battery cell is improved, and the temperature difference inside the battery cell is significantly reduced.
3. According to the present invention, each current collector in the battery cell is used as a heat conducting member, and the extension part of each current collector can form a heat conducting channel that is connected with the battery case directly or via a heat conductor for heat dissipation. In the prior art, only two sides of each battery cell are used to dissipate heat, while in the present invention, the battery cell has an apparently large heat conducting area, featuring good heat dissipating effect, and these advantages of the present invention are particularly significant for the assembled battery module.
4. With the battery module of the present invention, all the battery cells can be closely arranged to each other. When the battery cells are divided into several columns, all the battery cells in each column can also be closely arranged to each other, which is extremely advantageous, as it effectively improves the energy density per unit volume of the battery module and the battery pack.
5. The extension parts of the current collectors enable rapid and uniform heat conduction of the battery cell, including rapid and uniform heat dissipation and self-heating, which effectively improves the performance of the battery, as well as the energy density per unit volume of the battery cell.
6. The thickness of the battery cell along the stacking direction of the positive plate, the diaphragm and the negative plate can be greater than the length or width of the positive current collector or the negative current collector, so as to improve the capacity of the battery cell.
7. With the battery module of the present invention, all the battery cells in the battery module can be densely arranged to effectively improve the energy density per unit volume of the battery, and the volume of the battery pack can be significantly reduced under the same capacity requirement, thus improving the overall performance of the automobile.
8. The present invention utilizes the positive and negative current collectors inherent in the battery cell to dissipate heat, creating a concise structural design while fulfilling the heat dissipation function, which reduces the number of components, improves the reliability of the heat dissipation management system, and reduces the costs in batch production.

### Brief Description of the Drawings

The appended drawings to the description are used to provide a further understanding of the present invention. The embodiments and their illustrations are used to explain the invention, but are intended in no way to constitute an improper limitation of the invention.
Fig. 1 is a structural diagram of the first embodiment of a battery cell of the present invention.
Fig. 2 is a front view of the battery cell shown in FIG. 1.
Fig. 3 is a sectional diagram along the line B-B of the battery cell shown in Fig. 2.
wherein 100 is the battery cell, 1 is the positive plate, 11 is the positive current collector, 111 is the edge of the positive current collector, 12 is the positive active material layer, and 121 is the edge of the positive active material layer; 2 is the negative plate, 21 is the negative current collector, 211 is the edge of the negative current collector, 22 is the negative active material layer, and 221 is the edge of the negative active material layer; 3 is the diaphragm, 31 is the edge of the diaphragm, 6 is the battery case, 61 is the shell, 611 is the bottom of the shell, 62 is the end cover, 101 is the positive heat dissipation surface of the battery case, and 102 is the negative heat dissipation surface of the battery case.

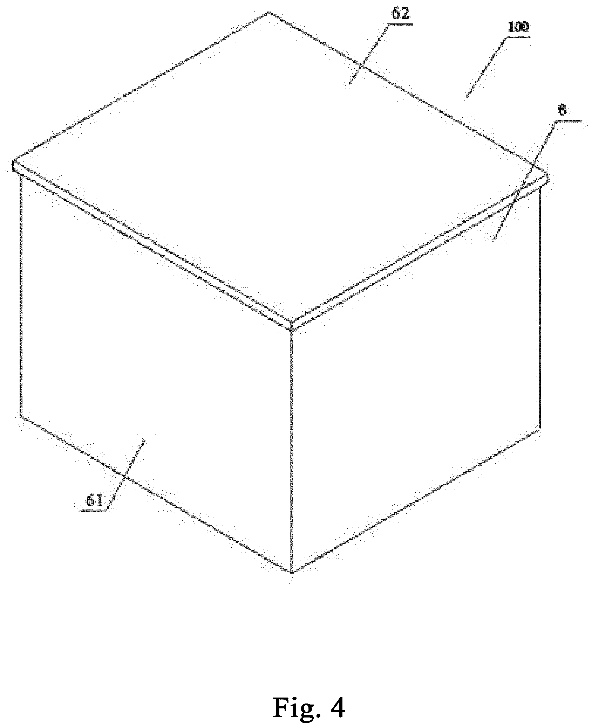

Fig. 4 is a structural diagram of the second embodiment of a battery cell of the present invention.

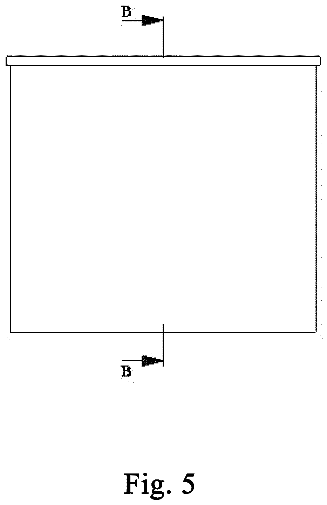

Fig. 5 is a front view of the battery cell shown in Fig. 4.

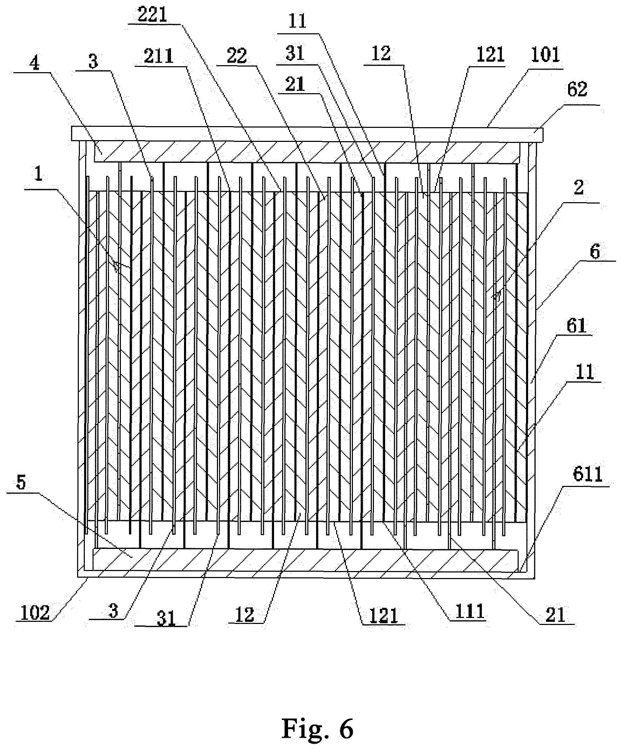

Fig. 6 is a sectional diagram along the line B-B of the battery cell shown in Fig. 5.
   wherein 100 is the battery cell, 1 is the positive plate, 11 is the positive current collector, 111 is the edge of the positive current collector, 12 is the positive active material layer, and 121 is the edge of the positive active material layer; 2 is the negative plate, 21 is the negative current collector, 211 is the edge of the negative current collector, 22 is the negative active material layer, and 221 is the edge of the negative active material layer; 3 is the diaphragm, 31 is the edge of the diaphragm, 4 is the first heat conductor, 5 is the second heat conductor, 6 is the battery case, 61 is the shell, 62 is the end cover, 611 is the bottom of the shell, 101 is the positive heat dissipation surface of the battery case, and 102 is the negative heat dissipation surface of the battery case.

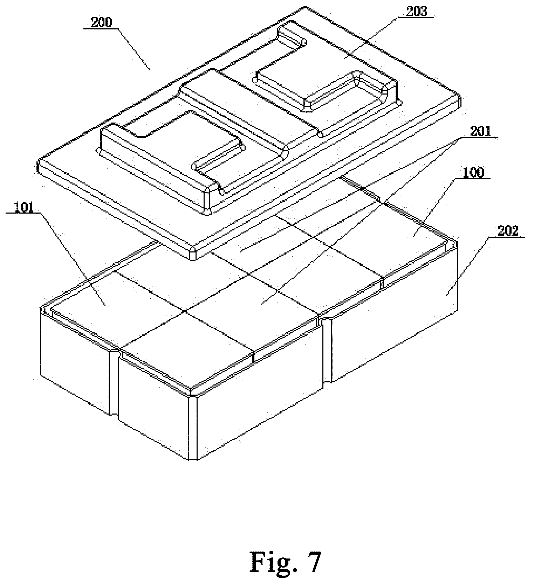

Fig. 7 is a structural diagram of an embodiment of a battery module composed of the battery cells according to technical solution 1 of the present invention.

### Detailed Description of the Embodiments

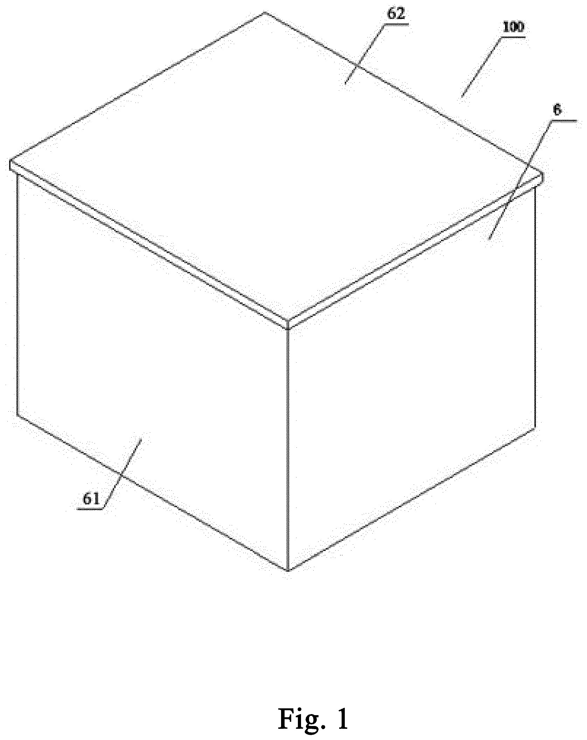

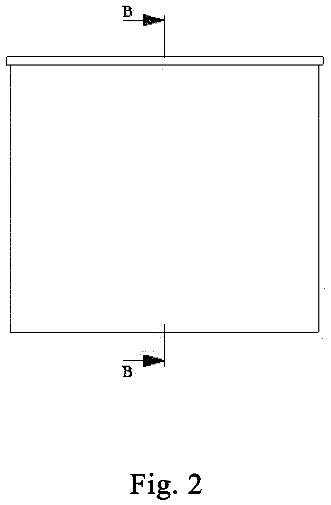

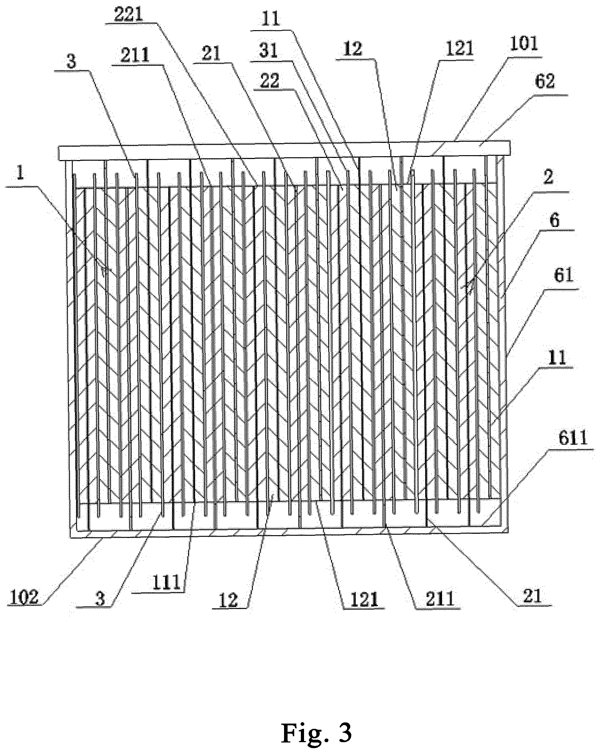

In order to better understand the technical solutions of the present invention, embodiments of the technical solutions of the invention are described in detail below in conjunction with Figs. 1-7.

### Embodiment 1:

As shown in Figs. 1-3, a battery cell 100 comprises a battery case 6, several layers of cyclically and alternately stacked positive plates 1, diaphragms 3 and negative plates 2, wherein the battery case 6 comprises a shell 61 and an end cover 62, the positive plates 1, the diaphragms 3 and the negative plates 2 are enclosed in the battery case 6; each positive plate 1 comprises a positive current collector 11 and a positive active material layer 12 covering one or both side surfaces thereof, the negative plate 2 comprises a negative current collector 21 and a negative active material layer 22 covering one or both side surfaces thereof, and each diaphragm 3 is provided between the adjacent positive plate 1 and negative plate 2. In this embodiment, an edge of the positive current collector 11 extends outward beyond an edge 121 of the positive active material layer 12 and an edge 31 of the diaphragm 3, and an edge 211 of the negative current collector 21 and an edge 221 of the negative active material layer on the same side are shorter than the edge 31 of the diaphragm 3, but not shorter than the edge 121 of the positive active material layer 12; the positive current collectors 11 extend to be connected with the adjacent end cover 62; the end cover 62 connected with the positive current collectors 11 is used as a positive heat dissipation surface 101 of the battery.

In this embodiment, meanwhile, another edge of the negative current collector 21 extends outward beyond an edge of the negative active material layer 22 and an edge 31 of the diaphragm 3, and an edge 111 of the positive current collector and an edge 121 of the positive active material layer on the same side are shorter than the edge 31 of the diaphragm 3, and not beyond an edge 221 of the negative active material layer 22; the negative current collectors 21 extend to be connected with an inner side of the adjacent bottom 611 of the shell of the battery case; the bottom 611 connected with the negative current collectors is used as a negative heat dissipation surface 102 of the battery, and the heat is then dissipated to the outside via the battery case.

In this embodiment, the extension parts of the positive current collectors 11 and of the negative current collectors 21 are directly connected to the battery case, guiding the heat on each of the positive current collectors 11 and the negative current collectors 21 to the shell 61 or the end cover 62 of the battery case at the same shortest heat conducting distance.

The extension parts of the positive current collectors and of the negative current collectors are enclosed within the battery case 6.

In practical applications, in order to achieve a better technical effect, the outward extending edge of each positive current collector and that of each negative current collector are located at different sides thereof; alternatively, two or more edges of each positive current collector and/or of each negative current collector extend outwardly at the same time.

Preferably, in this embodiment, the outwardly extending edge of the positive current collector and that of the negative current collector are opposite edges.

In this embodiment, the extension parts of the positive current collectors 11 and of the negative current collectors 21 are connected to the adjacent end cover 62 and the bottom 611 of the shell 61 by way of direct contact connection, respectively. In practical applications, they may also be connected by way of locking connection, abutting connection, pressing connection, welding connection, adhesion connection or fastening connection.

In practical applications, the extension parts of the positive current collectors and of the negative current collectors may be connected to the adjacent end cover or shell of the battery base after bending by way of direct contact connection, locking connection, abutting connection, pressing connection, welding connection, adhesion connection or fastening connection.

In practical applications, the extension parts of several or all of the positive current collectors may be fastened to each other before connecting to the shell or end cover of the battery case.

In practical applications, the extension parts of several or all of the negative current collectors may be fastened to each other before connecting to the shell or end cover of the battery case.

Alternatively, the extension parts of several or all of the positive current collectors or of several or all of the negative current collectors may be fastened to each other at the same time before connecting to the adjacent shell or end cover of the battery case respectively.

In practical applications, rapid and uniform heat conduction of the battery cell is achieved by the extension of the current collectors; the thickness of the battery cell along the stacking direction of the positive plate, the diaphragm and the negative plate may be greater than the length or width of the positive current collector or the negative current collector. In the battery module composed of the battery cells, all the battery cells may be densely stacked to improve the energy density per unit volume of the battery.

### Embodiment 2:

As shown in Figs. 4-6, Embodiment 2 is different from Embodiment 1 in that each positive current collector extends to connect with the first heat conductor 4, and each negative current collector extends to connect with the second heat conductor 5, wherein the first heat conductor 4 is connected with the adjacent end cover 62, and the second heat conductor 5 is connected with the inner side of the adjacent bottom 611 of the shell; the extension parts of the positive current collectors and of the negative current collectors, the first heat conductor 4 and the second heat conductor 5 are enclosed in the battery case 6.

In this embodiment, the extension parts of the positive current collectors 11 and those of the negative current collectors 21 are respectively connected with the first heat conductor 4 and the second heat conductor 5. The first heat conductor 4 and the second heat conductor 5 are connected with the battery case to conduct the heat on each of the positive current collectors 11 and negative current collectors 21 to the shell 61 or the end cover 62 of the battery case at the same shortest heat conducting distance.

The first heat conductor and/or the second heat conductor are made of heat-conducting silica gel, metal sheets or other heat-conducting materials.

In practical applications, in order to achieve a better technical effect, the outward extending edge of each positive current collector and that of each negative current collector are located at different sides thereof.

Preferably, in this embodiment, the outward extending edge of each positive current collector and that of each negative current collector are opposite edges.

In this embodiment, the positive current collectors and the negative current collectors extend to be connected in direct contact with the first heat conductor and the second heat conductor respectively. In practical applications, they may also be connected by way of locking connection, abutting connection, pressing connection, welding connection, adhesion connection or fastening connection.

In practical applications, the extension parts of the positive current collectors and of the negative current collectors may, upon bending, be connected with the first heat conductor and the second heat conductor respectively by way of direct contact connection, locking connection, abutting connection, pressing connection, welding connection, adhesion connection or fastening connection.

In practical applications, the extension parts of several or all of the positive current collectors may be fastened to each other before connecting to the first heat conductor.

In practical applications, the extension parts of several or all of the negative current collectors may be fastened to each other before connecting to the second heat conductor.

Alternatively, the extension parts of several or all of the positive current collectors and of several or all of the negative current collectors may be fastened to each other respectively at the same time before connecting to the first heat conductor and the second heat conductor, respectively.

The first and second heat conductors are connected with the shell or end cover of the battery case by way of contact connection, locking connection, abutting connection, pressing connection, welding connection, adhesion connection or fastening connection.

In practical applications, the extensions of the current collectors and the first and second heat conductors are used to create rapid and uniform heat conduction of the battery cell; the thickness of the battery cell along the stacking direction of the positive plates, the diaphragms and the negative plates may be greater than the length or width of the positive current collector or the negative current collector. In the battery module composed of battery cells, all the battery cells may be densely stacked to improve the energy density per unit volume of the battery.

### Embodiment 3:

Fig. 7 shows an embodiment of a battery module composed of the battery cells according to technical solution 1 of the present invention. Embodiment 3 is described in detail below in conjunction with Fig. 7.

In Fig. 7, 200 is a battery module, 201 is a battery column, 202 is a module housing, 203 is an end cover of the battery module, 100 is a battery cell, and 101 is a positive heat dissipation surface of the battery case of the battery cell.

As shown in Fig. 7, a battery module according to the technical solutions of the present invention comprises several battery cells 100 and a module housing 202. The battery cells 100 are the battery cells described in one of the three technical solutions for achieving the first objective of the present invention, wherein the battery cells are electrically connected to each other, and all the battery cells 100 are closely arranged to each other. In the schematic diagram of this embodiment, the battery module comprises eight battery cells, but in practical applications, a battery module may contain more or fewer battery cells.

In this embodiment, the positive heat dissipation surface 101 of the shell of each battery cell faces the end cover 203 of the battery module, and the negative heat dissipation surface faces the inner side of the bottom of the module housing 202.

Further, in this embodiment, in order to better illustrate the arrangement of battery module, the eight battery cells are divided into two battery columns 201. In each column, four battery cells 100 are electrically connected and closely arranged to each other, and the two battery columns 201 are also closely arranged to each other.

In order to achieve a better technical effect, the module housing may further be internally provided with a heat dissipation device that contacts the positive and/or negative heat dissipation surfaces of the battery case.

The battery cell and battery module according to the technical solutions of the present invention enable rapid conduction and dissipation of the heat inside the battery, improve the thermal conductivity of the battery cell and the battery module, effectively improve the energy density per unit volume of the battery cell, and significantly reduce the volume of the battery cell, battery module, and battery pack under the same capacity requirement.

The above are some preferred embodiments of the present invention. For the structures and components not described in detail, it should be understood that they are implemented with general equipment and methods existing in the art.

The above embodiments and accompanying drawings of the present invention are only intended to facilitate understanding of the technical solutions of the invention, and are not intended to limit the technical solutions and the protection scopes of the present invention. The improvements made for the technical solutions as disclosed in the claims and specification by using equivalent technical means or technical equipment should be considered to fall within the scope of the claims and specification of the present invention.

The battery cell and battery module according to the technical solutions of the present invention may be widely used in fields requiring batteries, especially in areas requiring large capacity batteries.

## Claims

1. A battery cell, comprising a battery case, several layers of cyclically and alternately stacked positive plates, diaphragms and negative plates, wherein the battery case comprises a shell and an end cover, the positive plates, the diaphragms and the negative plates are enclosed in the battery case; each positive plate comprises a positive current collector and a positive active material layer covering one or both side surfaces thereof, each negative plate comprises a negative current collector and a negative active material layer covering one or both side surfaces thereof, and each diaphragm is provided between adjacent positive and negative plates, **characterized in that** at least one edge of the positive current collector (11) extends outward beyond an edge (121) of the positive active material layer (12) and an edge (31) of the diaphragm, and an edge (211) of the negative current collector (21) and an edge (221) of the negative active material layer on the same side are shorter than the edge (31) of the diaphragm, but not shorter than the edge (121) of the positive active material layer (12); the positive current collectors (11) extend to be connected with the adjacent shell (61) or end cover (62) of the battery case (6), or extend to be connected with a first heat conductor (4), wherein the first heat conductor (4) is connected with the adjacent shell (61) or end cover (62) of the battery case (6); the extension parts of the positive current collectors (11) and the first heat conductor (4) are enclosed in the battery case (6); the shell (61) or end cover (62) of the battery case (6) connected with the positive current collectors (11) or the first heat conductor (4) is used as a positive heat dissipation surface (101) of the battery; the first heat conductor (4) is made of a heat conducting material so as to conduct the heat on each positive current collector (11) to the shell or end cover of the battery case at the same shortest heat conducting distance.

2. A battery cell, comprising a battery case, several layers of cyclically and alternately stacked positive plates, diaphragms and negative plates, wherein the battery case comprises a shell and an end cover, the positive plates, the diaphragms and the negative plates are enclosed in the battery case; each positive plate comprises a positive current collector and a positive active material layer covering one or both side surfaces thereof, each negative plate comprises a negative current collector and a negative active material layer covering one or both side surfaces thereof, and each diaphragm is provided between adjacent positive and negative plates, **characterized in that** at least one edge of the negative current collector (21) extends outward beyond an edge (221) of the negative active material layer (22) and an edge (301) of the diaphragm (3), and an edge (111) of the positive current collector (11) and an edge (121) of the positive active material layer (12) on the same side are shorter than an edge (301) of the diaphragm, and not beyond the edge (221) of the negative active material layer (22); the negative current collectors (21) extend to be connected with the adjacent shell (61) or end cover (62) of the battery case, or extend to be connected with a second heat conductor (5), wherein the second heat conductor (5) is connected with the adjacent shell (61) or end cover (62) of the battery case; the extension parts of the negative current collectors (21) and the second heat conductor (5) are enclosed in the battery case (6); the shell (61) or end cover (62) of the battery case connected with the negative current collectors (21) or the second heat conductor (5) is used as a negative heat dissipation surface (102) of the battery; the second heat conductor (5) is made of a heat conducting material so as to conduct the heat on each negative current collector (21) to the shell (61) or end cover (62) of the battery case at the same shortest heat conducting distance.

3. The battery cell according to claim 1, **characterized in that** at least one edge of the negative current collector (21) extends outward beyond an edge (221) of the negative active material layer (22) and an edge of the diaphragm (3), and an edge (111) of the positive current collector (11) and an edge (121) of the positive active material layer (12) on the same side are shorter than an edge (301) of the diaphragm (3), and not beyond the edge (221) of the negative active material layer (22); the outward extending edge of the positive current collector (11) and that of the negative current collector (21) are located at different sides thereof; the negative current collectors (21) extend to be connected with the adjacent shell (61) or end cover (62) of the battery case, or extend to be connected with a second heat conductor (5), wherein the second heat conductor (5) is connected in contact with the adjacent shell (61) or end cover (62) of the battery case; the extension parts of the negative current collectors (21) and the second heat conductor (5) are enclosed in the battery case (6); the shell (61) or end cover (62) of the battery case connected with the negative current collectors (21) or the second heat conductor (5) is used as a negative heat dissipation surface (102) of the battery; the second heat conductor (5) is made of a heat conducting material, so as to conduct the heat on each negative current collector (21) to the shell (61) or end cover (62) of the battery case at the same shortest heat conducting distance.

4. The battery cell according to one of claims 1 to 3, **characterized in that** the extension parts of the positive current collectors (11) are connected, by way of direct contact connection, locking connection, abutting connection, pressing connection, welding connection, adhesion connection or fastening connection, with the adjacent shell (61) or end cover (62) of the battery case directly or after bending.

5. The battery cell according to one of claims 1 to 3, **characterized in that** the extension parts of the positive current collectors (11) are connected, by way of direct contact connection, locking connection, abutting connection, pressing connection, welding connection, adhesion connection or fastening connection, with the first heat conductor (4) directly or after bending.

6. The battery cell according to one of claims 2 to 3, **characterized in that** the extension parts of the negative current collectors are connected, by way of direct contact connection, locking connection, abutting connection, pressing connection, welding connection, adhesion connection or fastening connection, with the adjacent shell (61) or end cover (62) of the battery case directly or after bending.

7. The battery cell according to one of claims 2 to 3, **characterized in that** the extension parts of the negative current collectors (21) are connected, by way of direct contact connection, locking connection, abutting connection, pressing connection, welding connection, adhesion connection or fastening connection, with the second heat conductor (5) directly or after bending.

8. The battery cell according to one of claims 1 to 3, **characterized in that** the extension parts of several or all of the positive current collectors (11) are fastened to each other.

9. The battery cell according to one of claims 2 to 3, **characterized in that** the extension parts of several or all of the negative current collectors (21) are fastened to each other.

10. The battery cell according to one of claims 1 to 3, **characterized in that** the first heat conductor (4) and/or the second heat conductor (5) are made of heat-conducting silica gel, metal sheets or other heat-conducting materials.

11. The battery cell according to one of claims 1 to 10, **characterized in that** the thickness of the battery cell along a stacking direction of the positive plates (1), the diaphragms (3) and the negative plates (2) is greater than the length or width of the positive current collector or the negative current collector.

12. A battery module, comprising several battery cells according to one of claims 1-11 and a module housing, **characterized in that** the battery cells are electrically connected with each other, and all the battery cells are closely arranged to each other.

13. A battery module, comprising several battery cells according to one of claims 1-11 and a module housing, **characterized in that** the several battery cells (100) are divided into several columns, and all the battery cells in each column are electrically connected and closely arranged to each other, and the columns are also closely arranged to each other.

14. The battery module according to claim 13, **characterized in that** the module housing is internally provided with a heat dissipation device, which is in contact with the positive and/or negative heat dissipation surface of the battery case.
